# EUROPEAN PATENT SPECIFICATION

(11) **EP 1 242 794 B1**
(45) Date of publication and mention of the grant of the patent: **08.04.2009**
(21) Application number: 00966631.4
(22) Date of filing: 18.09.2000
(51) Int. Cl.: G01F 23/284, H01Q 17/00

(54) **APPARATUS FOR MEASURING THE LEVEL IN A CONTAINER**
VORRICHTUNG ZUR MESSUNG DES FÜLLSTANDES IN EINEM BEHÄLTER
APPAREIL SERVANT A MESURER LE NIVEAU DANS UN CONTENEUR

(30) Priority: 21.10.1999 SE 9903855
(43) Date of publication of application: 25.09.2002
(73) Proprietor: Rosemount Tank Radar AB, 402 51 Göteborg (SE)
(72) Inventor: BERGDAHL, Peter, S-590 54 Linköping (SE); STRÖMBERG, Joakim, S-589 51 Linköping (SE); MARCUS, Carina, S- 582 16 Linköping (SE)
(74) Representative: Lind, Urban Arvid Oskar
(86) International application number: PCT/SE2000/001806
(87) International publication number: WO 2001/029523

(56) References cited:
- DE-A1- 19 510 484
- SE-C- 504 020
- US-A- 2 464 006

## Description

The invention relates to an absorber for microwaves that is fitted to the base of a tank that is devised for storing a liquid, such as liquid gas. The absorber is positioned below the opening of a pipe, which is used as a waveguide for microwaves from a radar, which measures the distance to the surface of the liquid in the tank. The purpose of the absorber is to prevent the base of the tank generating an echo that can disturb the wave reflected by the liquid surface.

### STATE OF THE ART

The use of radar mounted on the roof of a tank is a common technique today for determining the level of the surface of material, in the form of a liquid or a solid grain-shaped material, stored in a tank. In some applications of this technique, a vertically mounted pipe is used as a waveguide for the microwaves sent from the radar downwards to the surface of the material in the tank, where the microwaves are reflected by the surface of the material as an echo, and are sent back to a receiver in the radar. By analysing the propagation time for a transmitted microwave signal and the same signal reflected by the surface, and thus the level of the material in the tank, the distance to the surface may be determined. The said technique is employed in tanks of various types, for example in tanks and cisterns used to store oil or products refined from oil.

The technique presented above for measuring the level of contents by radar has, to date, not been used in certain types of tank. One example is tanks on ships for storage of liquid gas. These tanks are normally designed as large rectangular blocks, for which the area of the base can be very big, as great as the size of a football pitch with a height of up to 30 m. In such cases, the walls of the tank are made of a thin metal membrane, approximately 1mm thick. The membrane is supported in turn by a wooden structure, which makes the whole construction light in weight. Since the area of the base of a tank of this type is large, it is of utmost importance that the liquid level, i.e. the liquid gas, can be read with a high degree of accuracy. The large area implies that small changes in the liquid level correspond to relatively large changes in the volume of liquid. If radar is used for measuring, with a pipe acting as a waveguide, the measurement carried out at higher levels may be taken in a controlled fashion and will produce good measurement results. The pipe acting as a waveguide must have an opening at its end above the base of the tank, because the pipe is subjected to large changes in length caused by the large variations in temperature that a tank periodically filled with liquid gas displays. Consequently, a measurement of the liquid level close to the base of the tank will be performed in free space if it is carried out by a radar level measuring apparatus.

In order to permit determination, using radar, of the level of the liquid surface close to the base of the tank, it is very important that the base itself does not produce an echo that is excessively large in comparison to the echo that the surface of the liquid gives rise to. One difficulty in this respect is that the type of metal membrane of which the base of a tank for liquid gas is made produces a very strong echo at the wavelengths used. Partly because of these difficulties, the technique of level measuring by radar has not been employed in tanks for liquid gas, where the tanks are of the said membrane type and made in the shape of rectangular blocks.

### DESCRIPTION OF INVENTION

In accordance with an aspect of the invention, an apparatus and a method are presented here for determining the liquid level in a tank by means of a radar level-measuring apparatus, which transmits microwaves downwards to the surface of the liquid through a waveguide, in the form of a vertically arranged pipe, which is open close to the base of the tank, and which after reflection of the microwaves from the liquid surface receives the microwaves for determining the level of the liquid surface, where an absorber for microwaves is placed at the base of the tank below the opening of the pipe to absorb the greater part of the microwave energy that is incident on the base of the tank.

It is the object of the invention to ensure that the difference between the signal strength of the microwave signal reflected from the liquid surface and that of the signal reflected by the base of the tank is sufficiently large that these signals cannot be confused with each other by the radar level measuring device.

The apparatus and method are, in particular, intended to be used in tanks with liquid which is not of a clogging character. It is primarily intended for use in tanks for storage of liquid gas. If the absorber is to fulfil its function for a long period of time, the stored material in the tank cannot be of such character that sticky material builds up on the surface of the absorber.

The absorber is made of a material that is preferably composed of a flouro-polymer resin, such as PolyTetraFlouroEthylen (PTFE). This material is known, for example, under the trade name TEFLON®. The material has, in addition, a component of carbon powder, which imparts the microwaves-absorbing properties.

The absorber is modelled in the form of spikes, with the tips of the spikes facing the incident microwaves. The absorber is preferably designed as a number of closely arranged pyramids on a connected plate of the absorbing material. This type of design is also present in devices for absorption of sound in echo-free rooms. The reason for using spikes in the shape of pyramids is that the microwaves on contact with the absorber hits a successively increasing area of absorption material, whereby the microwaves' transition from propagation in air (or other gas) to propagation in the absorption material is mild, so that the microwaves can be absorbed effectively without undesirable reflection at the base of the tank. The absorption of microwaves happens with increasing effectiveness with depth in the absorber, since its cross-sectional area increases with depth

One advantage of the absorber according to the invention is that it permits measurement of the liquid level with a high degree of accuracy using a radar level-measuring device, even close to the base, in tanks with liquid gas. Another advantage is that it is possible to measure the liquid level right down to the height defined as "empty tank". A further advantage is that the proposed absorption material can be inserted into tanks of the aforementioned type without risk for introduction of unsuitable matter or material in the tank.

### DESCRIPTION OF DRAWINGS

Figure 1 shows schematically a sectional view of a cut-away tank, in which a liquid is stored and where an absorber according to the invention is fitted to the base of the tank below a waveguide, which sends microwaves towards the bottom.
Figure 2a shows the aforementioned absorber in a plan view from above.
Figure 2b shows a sectional view of a version of the aforementioned absorber where each pyramidal part stands on a separate rectangular prism, which are linked together to make a plate.

### DESCRIPTION OF EMBODIMENTS

A number of embodiments of the invention are described below with aid of the drawings.

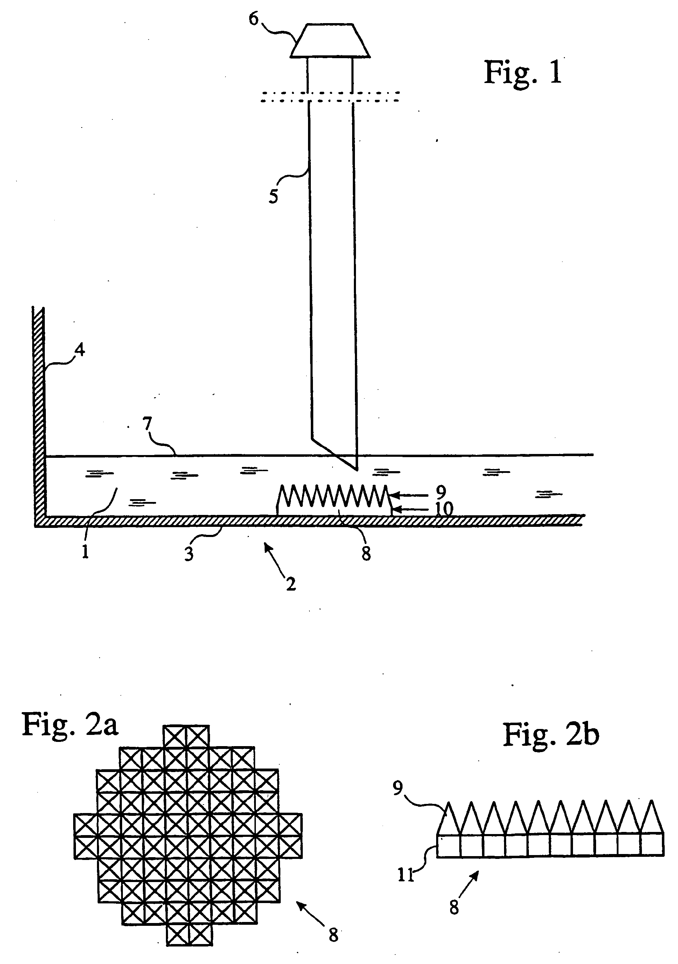

In Figure 1, a liquid gas 1 is stored in a tank 2, where the base of the tank 3 is composed of a metal membrane. The walls 4 of the tank are partly illustrated in the drawing. In the roof of the tank 2, or running through the roof of the tank 2, a vertical waveguide 5 in the form of a pipe is arranged. The waveguide is terminated a little above the base 3 of the tank, whereby the waveguide is open downwards. In the upper part of the waveguide 5, a microwave radar 6 is fitted. As already mentioned, this radar 6 transmits a microwave signal through the waveguide 5 to be reflected by the liquid surface 7, which means that a reflected microwave signal can be received by the radar 6. By analysing the propagation time for the transmitted and the received signal, the level of the liquid surface 7 in the tank can be determined in a known way. In Figure 1, the level of the liquid surface is low; i.e. it is shown a little below the opening in the waveguide 5. Normally, it would be very difficult for the receiver of the reflected microwave to differentiate between an echo caused by the liquid surface 7 and an echo from the base 3 positioned immediately below the liquid surface. To rectify this, an absorber 8 has, in accordance with the aspect of the invention, been fitted to the base 3 of the tank 2, below the opening in the waveguide 5. The duty of the absorber is to absorb the greater part of the microwave energy that, from the waveguide 5, is incident on the liquid surface 7, and that is not reflected by this surface, thereby preventing an echo; i.e. a reflected wave created at the base 3 and sent to the receiver in the radar 6.

It is the object of the absorber 8 to absorb the greater part of the microwave energy incident on the base 3. To achieve this the absorber is composed of material that absorbs microwave energy to a high degree. To this end a plastic material in the form of PTFE has been chosen in the example. In the example, the material with the TEFLON trademark is used, with a component of carbon powder, a material that has good absorption capacity with respect to microwaves for the wavelength in question. In the example, the concentration of carbon powder is 1%. If the microwaves are incident on a plane surface comprised of the said effective absorption material, there is still a risk that a reflected wave will arise at the surface of the absorber. As a result of this, the absorber is constructed in such a way that it has increasing cross-sectional area in the forward movement direction of the microwaves. For that reason, in the example the absorber 8 is constructed as closely arranged standing pyramids 9. The pyramids are suitably attached to a shared plate 10 that holds the absorber together, where the basal surfaces of the pyramids rest on the shared plate. The plate 10 may be glued to the base 3 of the tank 2. Alternatively the basal surfaces of each individual pyramid 9 can stand on a rectangular block 11, after which these blocks 11 are connected to each other, for example by gluing, and fitted to the base in a similar way. Preferably, the absorber is fixed between a metal plate welded to the base of the tank, and a frame that frames the absorber and which is secured by screws to the metal plate.

The choice of material for the absorber was, as mentioned above, a PTFE material. This is not essential, since other material with the desired parameters can be used. According to the invention, the requirement for use is that the material has a relative dielectric constant that exceeds 1.8. The material, furthermore, should have the ability to incorporate up to 4% carbon without it being friable at the low temperatures, down to c. -165 °C, which can occur in tanks with liquid gas.

The height of the absorber is naturally adapted to the length of the microwave used. When the wavelength, as in the example of the embodiment, is 3 cm in free space, the height of the pyramids is 30 mm and the thickness of the plate 15 mm, whereby the height of the entire absorber will be 45 mm. By implication, this makes it possible to measure the level of the liquid surface down to 30 mm from the base of the tank, which is fully acceptable since this level, i.e. 30 mm, can be defined as empty tank. It should also be mentioned that it is not necessary for the absorber to absorb 100 % of the microwave energy, since it is advantageous that a residual echo from the base 3 remains, thereby making it possible to determine when the tank is, by definition, empty.

Within the scope of the invention, the embodiment can be varied in many ways. Thus, the spikes of the absorber, i.e. the pyramids referred to above, can be replaced by other geometric shapes. Furthermore, the material in the absorber can be varied in multiple ways, the requirement being that the material should absorb microwave energy, and have a composition that be accepted in a tank milieu.

## Claims

1. An apparatus for determining the liquid level in a tank (2) by means of a radar level measuring device (6), which is adapted to transmit microwaves downwards to the surface of the liquid (7) through a waveguide (5), in the form of a vertically arranged pipe, which is open close to the base (3) of the tank (2), and which after reflection of the microwaves from the liquid surface (7) is adapted to receive the microwaves for determining the level of the liquid surface, **characterized in that** an absorber (8) for microwaves is placed at the base (3) of the tank (2) below the opening of the pipe to absorb the greater part of the microwave energy that is incident on the base of the tank.

2. The apparatus according to claim 1, **characterized in that** the absorber (8) is modelled as a connected plate of spikes (9) with the tips of the spikes (9) facing the incident microwaves.

3. The apparatus according to claim 2, **characterized in that** the spikes are composed of closely arranged pyramids (9).

4. The apparatus according to claim 2 or 3, **characterized in that** the spikes are positioned on a plate of thickness of one's choice, where the plate and the spikes are integrated with one another.

5. The apparatus according to claim 1 or 2, **characterized in that** the material in the absorber (8) has a component of carbon.

6. The apparatus according to claim 5, **characterized in that** the material in the absorber (8) has a dielectric constant greater than 1.8, and an admixture of up to 4% carbon by weight without it being friable at temperatures down to -165 °C.

7. The apparatus according to claim 6, **characterized in that** the material in the absorber (8) is composed of a flouro-polymer resin.

8. The apparatus according to any one of the preceding claims, **characterized in that** the material is PTFE (PolyTetraFluoroEthylen).

9. The apparatus according to claim 1, **characterized in that** the absorber (8) is glued to the base of the tank (3), or, with the aid of a frame screwed to the base (3) of the tank.

10. The apparatus according to claim 1, **characterized in that** a clearance is provided between the opening and the absorber (8).

11. The apparatus according to claim 1, **characterized in that** the absorber (8) is arranged to absorb the greater part of the microwave energy that is incident on the base of the tank, but allow a residual echo from the base, thereby making it possible to determine when the tank is empty.

12. The apparatus according to claim 1, **characterized in that** the absorber (8) has a width in a direction parallel to the base (3) of the tank (2), said width exceeding a width of the opening in said direction.

13. A tank arrangement for storing a liquified gas, comprising:
a tank (2) for storing liquified gas, and
an apparatus for determining the liquid level in the tank according to any one of the claims 1-12.

## Patentansprüche

1. Vorrichtung zur Bestimmung der Flüssigkeitshöhe in einem Tank (2) mittels einer Radar-Höhenmessvorrichtung (6), die dafür geeignet ist, Mikrowellen durch einen Wellenleiter (5) abwärts zur Oberfläche der Flüssigkeit (7) zu übertragen, in Form eines vertikal angeordneten Rohrs, das in der Nähe des Grundes (3) des Tanks (2) offen ist, und die dafür geeignet ist, nach der Reflexion der Mikrowellen von der Flüssigkeitsoberfläche (7) die Mikrowellen zu empfangen, um die Höhe der Flüssigkeitsoberfläche zu bestimmen, **dadurch gekennzeichnet, dass** eine Absorptionsvorrichtung (8) für Mikrowellen am Grund (3) des Tanks (2) unterhalb der Öffnung des Rohrs angeordnet ist, um den Großteil der Mikrowellenenergie, die auf den Grund des Tanks trifft, zu absorbieren.

2. Vorrichtung nach Anspruch 1, **dadurch gekennzeichnet, dass** die Absorptionsvorrichtung (8) in Form einer angeschlossenen Platte mit Dornen (9) ausgeführt ist, wobei die Spitzen der Dornen (9) den auftreffenden Mikrowellen zugewandt sind.

3. Vorrichtung nach Anspruch 2, **dadurch gekennzeichnet, dass** die Dornen aus dicht nebeneinander angeordneten Pyramiden (9) bestehen.

4. Vorrichtung nach Anspruch 2 oder 3, **dadurch gekennzeichnet, dass** die Dornen auf einer Platte von beliebiger Dicke angeordnet sind, wobei die Platte und die Dornen einstückig miteinander ausgebildet sind.

5. Vorrichtung nach Anspruch 1 oder 2, **dadurch gekennzeichnet, dass** der Werkstoff in der Absorptionsvorrichtung (8) einen Kohlenstoffbestandteil aufweist.

6. Vorrichtung nach Anspruch 5, **dadurch gekennzeichnet, dass** der Werkstoff in der Absorptionsvorrichtung (8) eine Dielektrizitätskonstante von mehr als 1,8 und eine Kohlenstoffbeimischung von bis zu 4 Gewichts-% aufweist, wobei er tiefen Temperaturen von bis zu - 165°C ausgesetzt werden kann, ohne bröcklig zu werden.

7. Vorrichtung nach Anspruch 6, **dadurch gekennzeichnet, dass** der Werkstoff in der Absorptionsvorrichtung (8) aus einem Fluorpolymerharz besteht.

8. Vorrichtung nach einem der vorangehenden Ansprüche, **dadurch gekennzeichnet, dass** es sich bei dem Werkstoff um PTFE (PolyTetraFluorEthylen) handelt.

9. Vorrichtung nach Anspruch 1, **dadurch gekennzeichnet, dass** die Absorptionsvorrichtung (8) am Grund des Tanks (3) festgeklebt ist oder mit Hilfe eines Rahmens am Grund (3) des Tanks festgeschraubt ist.

10. Vorrichtung nach Anspruch 1, **dadurch gekennzeichnet, dass** ein Freiraum zwischen der Öffnung und der Absorptionsvorrichtung angeordnet ist.

11. Vorrichtung nach Anspruch 1, **dadurch gekennzeichnet, dass** die Absorptionsvorrichtung (8) dafür ausgebildet ist, den Großteil der Mikrowellenenergie, die auf den Grund des Tanks trifft, zu absorbieren, aber ein Restecho von dem Grund zuzulassen, wodurch es möglich ist zu bestimmen, wann der Tank leer ist.

12. Vorrichtung nach Anspruch 1, **dadurch gekennzeichnet, dass** die Absorptionsvorrichtung (8) eine Breite in einer Richtung parallel zu dem Grund (3) des Tanks (2) aufweist, wobei diese Breite größer ist als eine Breite der Öffnung in jener Richtung.

13. Tankanordnung zur Lagerung eines verflüssigten Gases, die Folgendes umfasst:
einen Tank (2) zur Lagerung von verflüssigtem Gas, sowie
eine Vorrichtung zur Bestimmung der Flüssigkeitshöhe in dem Tank nach einem der Ansprüche 1 bis 12.

## Revendications

1. Appareil pour déterminer le niveau de liquide dans une cuve (2) au moyen d'un dispositif de mesure du niveau radar (6)apte à transmettre des micro-ondes vers le bas de la surface du liquide (7) à travers un guide d'ondes (5), sous la forme d'un tuyau agencé à la verticale, qui est ouvert à proximité de la base (3) de la cuve (2), et qui après réflexion des micro-ondes depuis la surface du liquide (7) est apte à recevoir les micro-ondes pour déterminer le niveau de la surface du liquide, **caractérisé en ce qu'**un absorbeur (8) pour micro-ondes est placé à la base (3) de la cuve (2) au-dessous de l'ouverture du tuyau pour absorber la majeure partie de l'énergie à micro-ondes qui est incidente sur la base de la cuve.

2. Appareil selon la revendication 1, **caractérisé en ce que** l'absorbeur (8) est modelé sous la forme d'une plaque de pointes (9) connectée dont les bouts des pointes (9) font face aux micro-ondes incidentes.

3. Appareil selon la revendication 2, **caractérisé en ce que** les pointes sont composées de pyramides étroitement agencées (9).

4. Appareil selon la revendication 2 ou 3, **caractérisé en ce que** les pointes sont positionnées sur une plaque d'une épaisseur choisie, où la plaque et les pointes sont intégrées les unes avec les autres.

5. Appareil selon la revendication 1 ou 2, **caractérisé en ce que** le matériau dans l'absorbeur (8) a un composant de carbone.

6. Appareil selon la revendication 5, **caractérisé en ce que** le matériau dans l'absorbeur (8) a une constante diélectrique supérieure à 1,8, et un mélange pouvant atteindre 4 % de carbone en poids sans être friable à des températures aussi basses que -165 °C.

7. Appareil selon la revendication 6, **caractérisé en ce que** le matériau dans l'absorbeur (8) est composé d'une résine fluoropolymère.

8. Appareil selon l'une quelconque des revendications précédentes, **caractérisé en ce que** le matériau est du PTFE (polytétrafluoroéthylène).

9. Appareil selon la revendication 1, **caractérisé en ce que** l'absorbeur (8) est collé à la base de la cuve (2) ou, à l'aide d'un cadre vissé à la base (3) de la cuve.

10. Appareil selon la revendication 1, **caractérisé en ce que** un espace mort est formé entre l'ouverture et l' absorbeur (8).

11. Appareil selon la revendication 1, **caractérisé en ce que** l'absorbeur (8) est agencé de façon à absorber la majeure partie de l'énergie à micro-ondes qui est incidente sur la base de la cuve, mais de façon à permettre un écho résiduel depuis la base, ce qui permet ainsi de déterminer quand la cuve est vide.

12. Appareil selon la revendication 1, **caractérisé en ce que** l'absorbeur (8) a une extension dans un plan parallèle à la base (3) de la cuve (2) qui dépasse l'extension de l'ouverture du tuyau dans un plan parallèle à la base (3) de la cuve (2).

13. Système de cuve pour stocker un gaz liquéfié, comprenant :
une cuve (2) pour stocker le gaz liquéfié, et un appareil pour déterminer le niveau de liquide dans la cuve selon l'une quelconque des revendications 1 à 12.
